# EUROPÄISCHE PATENTSCHRIFT

(11) **EP 3 433 520 B1**
(45) Veröffentlichungstag und Bekanntmachung des Hinweises auf die Patenterteilung: **16.10.2019**
(21) Anmeldenummer: 17709051.1
(22) Anmeldetag: 06.03.2017
(51) Int. Cl.: F16K 24/04, B60K 15/00, B60K 15/03, B60K 15/035

(54) **ENT- UND / ODER BELÜFTUNGSVENTIL FÜR EINEN BETRIEBSFLÜSSIGKEITSBEHÄLTER**
PURGING AND/OR VENTILATION VALVE FOR AN OPERATING LIQUID CONTAINER
SOUPAPE DE PURGE ET/OU D'AÉRATION POUR UN RÉSERVOIR DE LIQUIDE DE FONCTIONNEMENT

(30) Priorität: 22.03.2016 DE 102016204770
(43) Veröffentlichungstag der Anmeldung: 30.01.2019
(73) Patentinhaber: Kautex Textron GmbH & Co. KG, 53229 Bonn (DE)
(72) Erfinder: KOUKAN, Ibrahim, 50999 Köln (DE); SCHUMACHER, Nicolai, 53227 Bonn (DE); GRUNERT, Ottmar, 07549 Gera (DE)
(74) Vertreter: Richly & Ritschel Patentanwälte PartG mbB
(86) Internationale Anmeldenummer: PCT/EP2017/055189
(87) Internationale Veröffentlichungsnummer: WO 2017/162421

(56) Entgegenhaltungen:
- WO-A1-2015/133039
- FR-A1- 2 896 568
- US-A- 5 711 339
- US-A1- 2003 189 110

## Beschreibung

Die vorliegende Erfindung betrifft ein Ent- und/oder Belüftungsventil, das auch als Abschaltventil bezeichnet wird, für einen Betriebsflüssigkeitsbehälter, sowie einen Betriebsflüssigkeitsbehälter aufweisend ein erfindungsgemäßes Ent- und/oder Belüftungsventil.

Ein Betriebsflüssigkeitsbehälter kann beispielsweise ein Kraftstoffbehälter, insbesondere für Diesel oder Benzin, oder ein Flüssigkeitsbehälter für wässrige Harnstofflösung sein, die für ein SCR-Verfahren (*Selectiv Catalytic Reduction*) benötigt wird. Bevorzugt handelt es sich um einen Kraftstoffbehälter, dessen Wand mehrschichtig ausgeführt ist. Noch bevorzugter umfasst die Wand oder Außenwand des Betriebsflüssigkeitsbehälters ein HDPE (*High Density Polyethylen*)*.* Ebenfalls bevorzugt ist der Betriebsflüssigkeitsbehälter im Extrusionsblasformverfahren hergestellt. Weiter bevorzugt ist der Flüssigkeitsbehälter für eine wässrige Harnstofflösung im Spritzgussverfahren hergestellt. Am bevorzugtesten handelt es sich bei dem Betriebsflüssigkeitsbehälter um einen Flüssigkeitsbehälter für eine wässrige Harnstofflösung, der auch als SCR-Behälter bezeichnet werden kann. Der SCR-Behälter wird bevorzugt im Spritzgussverfahren oder im Blasformverfahren hergestellt. Der SCR-Behälter weist weiter bevorzugt eine Wand umfassend HDPE auf. Am bevorzugtesten weist der SCR-Behälter eine einschichtige Wand, insbesondere aus HDPE, auf.

Im Folgenden wird auf einen Kraftstoffbehälter Bezug genommen, wobei sämtliche Ausführungen auch allgemein für Betriebsflüssigkeitsbehälter anwendbar sind. Insbesondere wird erneut darauf hingewiesen, dass es sich bei dem Betriebsflüssigkeitsbehälter besonders bevorzugt um einen SCR-Behälter handelt. Weiterhin wird im Folgenden ein Ent- und/oder Belüftungsventil teilweise lediglich als Entlüftungsventil oder Abschaltventil bezeichnet.

Damit beim Befüllen eines Kraftstoffbehälters mit Kraftstoff der Kraftstoffbehälter ungehindert befüllt werden kann, muss die sich im Kraftstoffbehälter befindliche Luft bzw. das sich im Kraftstoffbehälter befindliche Luft-Gas-Gemisch aus dem Kraftstofftank entweichen können, da andernfalls ein Druckanstieg innerhalb des Kraftstofftanks den Befüllvorgang behindern würde. Daher ist zum Entlüften des Kraftstoffbehälters ist im Kraftstoffbehälter üblicherweise zumindest ein Entlüftungsventil vorgesehen.

Aus dem Stand der Technik bekannte Entlüftungsventile (siehe z.B. FR 2 896 568 A1, US 2003/0189110 A1 oder US 5,711,339) umfassen ein hohlförmiges Ventilgehäuse, das zumindest eine Kommunikationsöffnung aufweist, mittels der ein Ventilgehäuseinnenraum mit dessen Umgebung fluidverbunden ist.

Bei Einbau des Entlüftungsventils in einen Kraftstoffbehälter ist der Ventilgehäuseinnenraum über die Kommunikationsöffnung mit dem Kraftstoffbehälterinnenraum fluidverbunden, so dass über die Kommunikationsöffnung ein Austausch von Kraftstoff und eines Kraftstoffdampf-Luft-Gemisches zwischen dem Kraftstoffbehälterinnenraum und dem Ventilgehäuseinnenraum ermöglicht ist.

Solche bekannten Entlüftungsventile weisen häufig einen komplizierten Aufbau auf. Weiterhin ist in dem über sie entweichenden Luft-Gas-Gemisch häufig noch ein zu hoher Anteil an Betriebsflüssigkeit enthalten.

Es ist wünschenswert ein Entlüftungsventil bereitzustellen, welches eine unkomplizierten und/oder kompakten Aufbau aufweist. Weiterhin ist es wünschenswert ein Entlüftungsventil bereitzustellen, durch welches die Konzentration der Betriebsflüssigkeit in dem aus dem Betriebsflüssigkeitsbehälter entweichenden Luft-Gas-Gemisch verringert wird. Ebenfalls wünschenswert ist es ein Entlüftungsventil bereitzustellen, welches bei der Betankung des Betriebsflüssigkeitsbehälters zu einem verbesserten Rückmeldeverhalten an die betankende Person führt.

Diese Aufgaben werden erfindungsgemäß durch ein Entlüftungsventil (Ent- und/oder Belüftungsventil) mit den in Anspruch 1 angegebenen Merkmalen gelöst. Vorteilhafte Ausgestaltungen sind in dessen Unteransprüchen angegeben.

Im Genaueren weist das erfindungsgemäße Entlüftungsventil für einen Betriebsflüssigkeitsbehälter ein Gehäuse mit einem Oberteil und einem Unterteil auf.

Bevorzugt sind Oberteil, Unterteil und/oder Gehäuse aus Kunststoff hergestellt. Noch bevorzugter sind Oberteil und Unterteil aus einem kompatiblen Kunststoff hergestellt, wie im Weiteren noch ausgeführt werden wird. Am bevorzugtesten sind Oberteil und/oder Unterteil aus einem HDPE hergestellt.

Weiter bevorzugt ist das Gehäuse zweiteilig. In anderen Worten bilden Oberteil und Unterteil nach deren Verbindung das Gehäuse. Hierdurch kann vorteilhafter Weise ein leicht und effizient herzustellendes Entlüftungsventil bereitgestellt werden.

Das Unterteil ist mit dem Oberteil derart verbindbar, dass das Gehäuse ein Aufnahmevolumen aufweist, welches durch eine zwischen dem Oberteil und dem Unterteil gebildete Trennwand begrenzt ist.

Bei der Verbindung des Oberteils mit dem Unterteil kann es sich um jegliche geeignete Verbindung handeln. Bevorzugt handelt es sich bei einer solchen Verbindung um eine formschlüssige, kraftschlüssige, und/oder stoffschlüssige Verbindung. Stoffschlüssige Verbindungen können beispielsweise durch ein Verkleben, bevorzugt ein Verschweißen erreicht werden. Eine kraftschlüssige Verbindung kann beispielsweise und bevorzugt dadurch erreicht werden, dass das Unterteil zumindest teilweise in das Oberteil eingeschoben oder eingesteckt wird, wobei die Ausgestaltung von Oberteil und Unterteil so gewählt werden, dass eine elastische Deformation von Oberteil und/Oberteil erfolgt. Gleichermaßen kann auch das Oberteil in das Unterteil eingeschoben oder eingesteckt werden. Eine formschlüssige Verbindung kann beispielsweise über Rastnasen und/oder korrespondierende Aufnahmen an Oberteil und/oder Unterteil erreicht werden, die beim Einstecken ineinandergreifen.

Bei dem Aufnahmevolumen handelt es sich bevorzugt um ein Aufnahmevolumen zur Aufnahme von aus dem entweichenden Luft-Gas-Gemisch enthaltener Betriebsflüssigkeit. Solche, in dem austretenden Luft-Gas-Gemisch enthaltene Betriebsflüssigkeit wird auch als *liquid carry-over* bezeichnet. In anderen Worten handelt es sich bevorzugt bei dem Aufnahmevolumen um ein Aufnahmevolumen zur Aufnahme von *liquid carry-over.*

Wie weiter unten in größeren Detail beschrieben wird, ist innerhalb dieses Aufnahmevolumens bevorzugt zumindest ein Tropfenabscheider, bevorzugt eine Prallfläche, angeordnet. Diese im Aufnahmevolumen angeordnete zusätzliche Oberfläche gewährleistet, dass das Luft-Gas-Gemisch das Entlüftungsventil nicht direkt über eine im Oberteil angeordnete Ausgangsöffnung verlässt, sondern umgelenkt wird. Hierbei wird die im Luft-Gas-Gemisch enthaltene Betriebsflüssigkeit abgeschieden und gelangt vorteilhafter Weise nicht an die Umgebung. Besonders bevorzugt hat das Aufnahmevolumen eine Größe von ≥ 20 und ≤ 40 ml, noch weiter bevorzugt von ≥ 25 und ≤ 35 ml. Am bevorzugtesten hat das Aufnahmevolumen eine Größe von ungefähr 30 ml. Es hat sich überraschenderweise herausgestellt, dass sich bei so gewählten Größen des Aufnahmevolumens insbesondere eine effektive Abscheidung bei wässriger Harnstofflösung (SCR) gewährleistet wird. Noch weiter bevorzugt gelten die angegebenen Größen des Aufnahmevolumens ohne Betrachtung des möglicherweise im Aufnahmevolumen angeordneten Tropfenabscheiders.

Die Trennwand wird bei Verbindung des Unterteils mit dem Oberteil gebildet und begrenzt das Aufnahmevolumen des Gehäuses. Die Trennwand kann dabei bevorzugt durch eine Wand des Oberteils und/oder des Unterteils gebildet werden. Besonders bevorzugt wird die Trennwand durch das Unterteil, bzw. dessen Wand gebildet. Weiter bevorzugt besteht die Trennwand aus Kunststoff.

Die Trennwand weist bevorzugt eine im Wesentlichen plane und/oder ebene Ausgestaltung auf, sie ist beispielsweise und bevorzugt tellerförmig ausgestaltet. In anderen Worten enthält die Trennwand im Wesentlichen keine Stufen oder Abstufungen. Sie weist weiterhin bevorzugt eine Wölbung auf, wie weiter unten im Detail beschrieben werden wird.

Das Unterteil des erfindungsgemäßen Entlüftungsventils weist zumindest ein erstes Ventilgehäuse mit einem ersten Ventilgehäuseinnenraum und ein zweites Ventilgehäuse mit einem zweiten Ventilgehäuseinnenraum auf, wobei in dem ersten Ventilgehäuseinnenraum ein erster Ventilkörper und in dem zweiten Ventilgehäuseinnenraum ein zweiter Ventilkörper lageveränderlich angeordnet ist.

Das erste und zweite Ventilgehäuse ist bevorzugt im Wesentlichen hohlzylinderförmig ausgebildet und weist eine Mantelfläche auf, die den Ventilgehäuseinnenraum umgibt. Weiterhin weist das erste und zweite Ventilgehäuse eine erste bzw. eine zweite Kommunikationsöffnung zum Fluidaustausch zwischen dem ersten bzw. zweiten Ventilgehäuse und einem Betriebsflüssigkeitsbehälterinnenraum auf. Bevorzugt ist die erste bzw. die zweite Kommunikationsöffnung nicht in der Mantelfläche des ersten bzw. zweiten Ventilgehäuse angeordnet. Weiter bevorzugt ist die erste bzw. die zweite Kommunikationsöffnung an der Stirnseite des Ventilgehäuses angeordnet, die von der Trennwand wegweist. Am bevorzugtesten entspricht die erste bzw. die zweite Kommunikationsöffnung an der Stirnseite des Ventilgehäuses der einen Öffnung eines Hohlzylinders.

Weiter bevorzugt sind die zumindest zwei Ventilgehäuse hinsichtlich ihrer Längserstreckung im Wesentlichen parallel zueinander angeordnet. Besonders bevorzugt sind das Unterteil und die zumindest zwei Ventilgehäuse einstückig ausgeführt. Hierdurch wird vorteilhafter Weise eine besonders leichte und effiziente Herstellung des erfindungsgemäßen Entlüftungsventils, besonders bevorzugt im Spritzgussverfahren, möglich.

Der erste bzw. zweite Ventilkörper kann jeglicher geeignete Ventilkörper sein. Besonders bevorzugt handelt es sich bei dem ersten und/oder zweiten Ventilkörper um einen becherförmigen Hohlkörper. Weiter bevorzugt handelt es sich bei dem ersten und/oder zweiten Ventilkörper um einen Schwimmer.

Ebenfalls bevorzugt ist der erste und/oder der zweite Ventilkörper lageveränderlich innerhalb des jeweiligen Ventilgehäuseinnenraums angeordnet, wobei die Längserstreckung des ersten und/oder zweiten Ventilkörpers parallel zur Längserstreckung des ersten bzw. zweiten Ventilgehäuse angeordnet ist.

Weiter bevorzugt wird der erste und/oder der zweite Ventilkörper mittels zumindest einem Abstandhalter innerhalb des jeweiligen Ventilgehäuseinnenraums zentriert. Durch den Abstandhalter wird vorteilhafterweise weiterhin ein Festfrieren des Ventilkörpers im Ventilgehäuseinnenraum wirksam vermieden. Dies ist insbesondere bei wässriger Harnstofflösung als Betriebsflüssigkeit von immensen Vorteil.

Der zumindest eine Abstandhalter kann jede geeignete Ausgestaltung annehmen, durch die seine Funktion gewährleistet wird. Dementsprechend kann der Abstandshalter beispielsweise als ein Vorsprung, eine Nase, oder ein Stift ausgebildet sein, welche(r) sich von dem verbundenen Bauteil weg erstreckt. Es ist jedoch ebenfalls möglich, dass der zumindest eine Abstandhalter die Form eines auf der Oberfläche des Bauteils angeordneten durchgängigen, oder teilweise unterbrochenen Grats aufweist. Der zumindest eine Abstandhalter ist immer so an einem der beiden Bauteile angeordnet, dass er in den Raum zwischen diesem verbunden Bauteil und dem zu kontaktierenden Bauteil ragt.

Der zumindest eine Abstandhalter kann am Ventilkörper und/oder am Ventilgehäuse angebracht sein, wobei ein einzelner Abstandshalter lediglich mit einem der beiden Bauteile verbunden ist und niemals mit beiden Bauteilen gleichzeitig. Genauer gesagt ist der zumindest eine Abstandhalter an der Umhüllenden des Ventilgehäuses und/oder des Ventilkörpers angeordnet. Bevorzugt ist der zumindest eine Abstandhalter am Ventilkörper angeordnet. Hierdurch wird eine stark vereinfachte Herstellung des Ventilkörpers mittels des Spritzgussverfahrens ermöglicht. Besonders bevorzugt ist daher der Ventilkörper und der zumindest eine Abstandhalter einstückig hergestellt.

Mittels des zumindest einen Abstandhalters wird neben der Zentrierung vorteilhafterweise auch eine verbesserte Relativbewegung des Ventilkörpers zu seinem jeweiligen Ventilgehäuse gewährleistet, da sich die beiden Bauteile lediglich über den zumindest ein Abstandhalter kontaktieren und somit die Kontaktfläche zwischen den Bauteilen minimiert wird. Durch diese minimierte Kontaktfläche wird gleichzeitig die Fläche minimiert, welche mit Betriebsflüssigkeit benetzt sein kann und die bei einem Einfrieren dieser Betriebsflüssigkeit zu einem Verlust der Beweglichkeit der beiden beweglichen Bauteile zueinander führen kann. Somit wird entweder ein Festfrieren der beiden Bauteile miteinander verhindert, oder die zum Lösen einer solchen Verbindung erforderliche Kraft minimiert.

Ebenfalls bevorzugt wird der erste und/oder der zweite Ventilkörper mittels zumindest zwei, bevorzugt drei, zueinander winkeläquidistante Abstandhalter innerhalb des jeweiligen Ventilgehäuseinnenraums zentriert. Beispielsweise ist im Falle des oben aufgeführten im Wesentlichen hohlzylinderförmigen Ventilgehäuses mit darin angeordnetem lageveränderlichen hohlförmigen Ventilkörper der Winkelabstand der Abstandhalter, die auf der Umhüllenden von Ventilgehäuse, bzw. Ventilkörper angeordnet sind, in Draufsicht auf die Stirnseite des Ventilgehäuses bzw. des Ventilkörpers 180° (zwei Abstandhalter), bzw. 120° (drei Abstandhalter).

Weiter bevorzugt weist der erste und/oder der zweite Ventilkörper an seiner der Trennwand zugewandten Seite eine Dichtung auf. Bevorzugt handelt es sich bei dieser Dichtung um eine Dichtung aus einem Elastomer.

In der Trennwand des erfindungsgemäßen Entlüftungsventils ist eine erste Lüftungsöffnung angeordnet, mittels der das Aufnahmevolumen und der erste Ventilgehäuseinnenraum fluidverbindbar sind. Weiterhin ist in der Trennwand eine zweite Lüftungsöffnung angeordnet, mittels der das Aufnahmevolumen und der zweite Ventilgehäuseinnenraum fluidverbindbar sind.

Bevorzugt ist die erste und/oder die zweite Lüftungsöffnung als Ventilsitz ausgeführt, die durch den ersten bzw. zweiten Ventilkörper, besonders bevorzugt durch eine am Ventilkörper angeordnete Dichtung, verschlossen werden kann. In anderen Worten kann die erste bzw. die zweite Lüftungsöffnung ventilgehäuseseitig durch den Ventilkörper verschlossen werden.

Weiter bevorzugt weist die erste Lüftungsöffnung eine größere lichte Weite als die zweite Lüftungsöffnung auf. Überraschenderweise stellte sich heraus, dass insbesondere bei wässriger Harnstofflösung, d.h. bei SCR-Lösung, die erste Lüftungsöffnung eine lichte Weite von ≥ 4 mm und die zweite Lüftungsöffnung eine lichte Weite von ≥ 0,5 mm und < 4 mm aufweisen muss, um eine besonders effektive Funktion des Entlüftungsventils zu gewährleisten. Besonders bevorzugt ist die lichte Weite der zweiten Lüftungsöffnung ≥ 0,8 mm und ≤ 1,2 mm und die lichte Weite der ersten Lüftungsöffnung ≥ 6 mm, weiter bevorzugt ≥ 6 mm und ≤ 15 mm, noch bevorzugter ≥ 6 mm und ≤ 15 mm. Ebenfalls bevorzugt beträgt die lichte Weite der ersten Lüftungsöffnung das 8- bis 12-fache, noch bevorzugter das 10-fache der lichten Weite der zweiten Lüftungsöffnung. Es wurde überraschenderweise gefunden, dass eine solche Relation zwischen den beiden lichten weiten der Lüftungsöffnungen eine besonders effektive Funktion des erfindungsgemäßen Lüftungsventils zur Folge hatte.

Das Gehäuse des erfindungsgemäßen Entlüftungsventils weist, insbesondere wenn das Unterteil mit dem Oberteil verbunden ist, eine Längserstreckung auf. Entlang dieser Längserstreckung weist das Gehäuse eine Höhe, d.h. eine Gehäusehöhe auf. Dies ist bevorzugt dann der Fall, wenn das erfindungsmäße Entlüftungsventil bestimmungsgemäß in einem Betriebsflüssigkeitsbehälter verbaut ist und dieser, weiter vorzugsweise, in einem Fahrzeug verbaut wurde.

Die erste Lüftungsöffnung und die zweite Lüftungsöffnung des erfindungsgemäßen Entlüftungsventils sind bezüglich der Längserstreckung des Gehäuses im Wesentlichen in einer gleichen Gehäusehöhe angeordnet. Dies bedeutet in anderen Worten, dass die genaue Positionierung der ersten bzw. zweiten Lüftungsöffnung im Wesentlichen von der Ausgestaltung der Trennwand abhängig ist. Da, wie oben beschrieben, die Trennwand bevorzugt eine im Wesentlichen plane und/oder ebene Ausgestaltung aufweist, liegen auch die beiden Lüftungsöffnungen bevorzugt in dieser Ebene. Weist die Trennwand hingegen die bevorzugte Wölbung auf, so kann die Höhe in der die erste Lüftungsöffnung angeordnet ist leicht von derjenigen abweichen, in der die zweite Lüftungsöffnung angeordnet ist. Bevorzugt ist die Differenz zwischen der Höhe der ersten und der zweiten Lüftungsöffnung ≤ 4 %, bevorzugter ≤ 2 % der Gehäusehöhe. Beispielsweise liegen in letzterem Fall bei einer Gehäusehöhe von 10 cm die beiden Lüftungsöffnungen hinsichtlich ihrer Höhe ≤ 0,2 cm auseinander.

Die erfindungsgemäße Anordnung der beiden Lüftungsöffnungen in einer im Wesentlichen gleichen Gehäusehöhe hat unter anderem den Vorteil, dass eine besonders leichte Herstellung des Entlüftungsventils gewährleistet wird, besonders bei Verwendung des Spritzgussverfahrens.

Erfindungsgemäß weist das Oberteil zumindest eine Ausgangsöffnung auf. Die Ausgangsöffnung durchbricht hierbei Wandung des Oberteils und stellt eine Fluidverbindung zur Umgebung dar. Besonders bevorzugt weist das Oberteil zumindest zwei, noch bevorzugter genau zwei Ausgangsöffnungen auf.

Erfindungsgemäß weist die zumindest eine Ausgangsöffnung ein Überdruck- und/oder Unterdruckventil auf. Noch bevorzugt weist das Oberteil zumindest zwei Ausgangsöffnungen auf, von denen eine ein Überdruckventil aufweist und die andere ein Unterdruckventil. Durch den Einsatz eines Überdruck- und/oder Unterdruckventils kann vorteilhafter Weise gewährleistet werden, dass der Betriebsflüssigkeitsbehälter im Wesentlichen keinem Überdruck und/oder Unterdruck ausgesetzt ist und gleichzeitig keine direkte Verbindung zur Umgebung besteht. So entsteht beim Betanken des Betriebsflüssigkeitsbehälters wie oben beschrieben zunächst ein Überdruck innerhalb des Behälters. Gleichsam entsteht bei Entnahme von Betriebsflüssigkeit aus dem Betriebsflüssigkeitsbehälter, vorzugsweise während des Betriebs eines Fahrzeugs, ein Unterdruck innerhalb des Behälters. Sowohl ein Überdruck als auch ein Unterdruck ist jedoch dann besonders nachteilig, wenn der Betriebsflüssigkeitsbehälter aus einem Kunststoff gefertigt ist, da dieser Kunststoff hierdurch Verformungen erleidet. Weiterhin führt, insbesondere bei wässriger Harnstofflösung, ein häufiger Gasaustausch zwischen Umgebung und Betriebsflüssigkeitsbehälterinnenraum zu einer nachteilhaften Kristallisation. Mittels des erfindungsgemäßen Überdruck- und/oder Unterdruckventils kann nun ein solcher Überdruck oder Unterdruck abgebaut werden um den Betriebsflüssigkeitsbehälter zu schonen, ohne dass dessen Innenraum direkt mit der Umgebung in Verbindung stünde. Weiterhin wird gleichzeitig der Gasaustausch auf ein Minimum reduziert um die oben beschriebene Kristallisation so weit wie möglich zu reduzieren.

Besonders bevorzugt ist das Überdruckventil und/oder das Unterdruckventil als Schirmpilzventil ausgeführt. Weiter bevorzugt weist das Unterdruckventil einen Öffnungsdruck von ≤ -10 mbar, bevorzugter ≥ -50 mbar und ≤ -2 mbar, bevorzugter ≥ -35 mbar und ≤ -15 mbar, noch bevorzugter von ungefähr -20 mbar auf. Das Überdruckventil weist bevorzugt einen Öffnungsdruck von ≥ 2 mbar, bevorzugter ≥ 2 mbar und ≤ 30 mbar, bevorzugter ≥ 5 mbar und ≤ 20 mbar, noch bevorzugter von ungefähr 10 mbar auf. Die zuvor genannten Öffnungsdrucke zeigten insbesondere bei einem Entlüftungsventil für einen SCR-Behälter eine besonders effektive Funktion.

Bevorzugt weist das erste Ventilgehäuse der vorliegenden Erfindung eine durchgängige Mantelfläche auf. In anderen Worten ist die Mantelfläche des ersten Ventilgehäuses nicht durch Öffnungen durchbrochen und steht somit lediglich über die erste Kommunikationsöffnung mit dem Betriebsflüssigkeitsbehälterinnenraum in Verbindung.

Weiter bevorzugt weist das zweite Ventilgehäuse der vorliegenden Erfindung zumindest eine dritte Kommunikationsöffnung zum Fluidaustausch zwischen dem zweiten Ventilgehäuseinnenraum und dem Betriebsflüssigkeitsbehälterinnenraum auf. In anderen Worten weist das zweite Ventilgehäuse zusätzlich zu der zweiten Kommunikationsöffnung zumindest eine dritte Kommunikationsöffnung auf.

Besonders bevorzugt ist die dritte Kommunikationsöffnung des zweiten Ventilgehäuses in der Mantelfläche, d.h. in der Wand des zweiten Ventilgehäuses angeordnet. Die dritte Kommunikationsöffnung kann - genau wie die erste oder die zweite Kommunikationsöffnung - jegliche Ausgestaltung aufweisen, die eine ordnungsgemäße Funktion ermöglicht. Noch bevorzugter ist die dritte Kommunikationsöffnung schlitzförmig ausgestaltet. Weiter bevorzugt weist die dritte Kommunikationsöffnung eine Größe von ≥ 10 mm², bevorzugter von ≥ 10 mm² und ≤ 30 mm², noch bevorzugter von ≥ 17 mm² und ≤ 21 mm² und am bevorzugtesten von ungefähr ≥ 19 mm² auf. Auch diese bevorzugten Größen zeigten überraschenderweise eine besonders effektive Funktion des erfindungsgemäßen Entlüftungsventils, insbesondere bei einem Betriebsflüssigkeitsbehälter für wässrige Harnstofflösung.

Ebenfalls bevorzugt befindet sich die dritte Kommunikationsöffnung bezüglich der Längserstreckung des Gehäuses im Wesentlichen in einer Gehäusehöhe, dass das obere Ende der Kommunikationsöffnung nach bestimmungsgemäßen Einbau des erfindungsgemäßen Entlüftungsventils in einen Betriebsflüssigkeitsbehälter unterhalb der Innenseite der oberen Wand des Betriebsflüssigkeitsbehälters angeordnet ist. Hierdurch wird vorteilhafter Weise gewährleistet, dass beim Betanken des Betriebsflüssigkeitsbehälters immer ein freies Volumen zwischen der Innenseite der oberen Wand und dem Betriebsflüssigkeitsspiegel vorhanden bleibt.

Wie zuvor ausgeführt kann das Oberteil bevorzugt formschlüssig und/oder kraftschlüssig, oder stoffschlüssig mit dem Unterteil verbunden sein. Hierdurch wird vorteilhafter Weise gewährleistet, dass das Gehäuse des erfindungsgemäßen Entlüftungsventils zunächst über einen Form- und/oder Kraftschluss zwischen Oberteil und Unterteil zusammengesetzt werden kann, bevor es in den Betriebsflüssigkeitsbehälter, bevorzugt in eine Öffnung in der Wandung des Betriebsflüssigkeitsbehälters, eingesetzt wird. Nach oder während dieses bestimmungsgemäßen Einsetzens bzw. Positionierens des erfindungsgemäßen Entlüftungsventils in den Betriebsflüssigkeitsbehälter kann dann eine stoffschlüssige Verbindung, bevorzugt eine Schweißverbindung, zwischen dem Oberteil und dem Unterteil und bevorzugt zwischen dem Oberteil, dem Unterteil und dem Betriebsflüssigkeitsbehälter hergestellt werden. Dabei wird die stoffschlüssige Verbindung besonders bevorzugt mit der Wand, noch bevorzugter der Außenwand, des Betriebsflüssigkeitsbehälters hergestellt. Bevorzugt sind daher das Oberteil, das Unterteil und der Betriebsflüssigkeitsbehälter stoffschlüssig und bevorzugt fluiddicht und stoffschlüssig miteinander verbindbar.

Weiter bevorzugt ist die formschlüssige und/oder kraftschlüssig, oder stoffschlüssige Verbindung zwischen Ober- und Unterteil fluiddicht. Hierunter ist zu verstehen, dass das ein Oberteil und ein Unterteil aufweisende Gehäuse des erfindungsgemäßen Entlüftungsventils insbesondere im Verbindungsbereich von Oberteil und Unterteil eine durchgängige Mantelfläche aufweist. Hierdurch wird unter anderem vorteilhafter Weise gewährleistet, dass das im Betriebsflüssigkeitsbehälter enthaltene Fluid (Betriebsflüssigkeit, Luft und/oder Gas-Luft-Gemisch) nur über definierte Öffnungen des erfindungsgemäßen Entlüftungsventils mit der Umgebung ausgetauscht werden kann. Noch bevorzugter ist die stoffschlüssige Verbindung zwischen Oberteil, Unterteil und Betriebsflüssigkeitsbehälter nach Einsetzen des Entlüftungsventils in einen Betriebsflüssigkeitsbehälter und Herstellung einer stoffschlüssigen Verbindung fluiddicht.

Bevorzugt bestehen das Oberteil und das Unterteil zumindest im Bereich der stoffschlüssigen Verbindung aus kompatiblen Kunststoffen. Unter einem kompatiblen Kunststoff soll vorliegend verstanden werden, dass insbesondere durch Verschweißen eine stoffschlüssige Verbindung zwischen dem Kunststoff des Oberteils und dem Kunststoff des Unterteils erzeugt werden kann. Dem Fachmann ist diesbezüglich eine Vielzahl von Kunststoffverbindungen bekannt, die miteinander verschweißt werden können. Beispielsweise kann es sich bei den beiden Kunststoffen um Polyethylene, bevorzugt HDPE handeln. Besonders bevorzugt liegen bei kompatiblen Kunststoffen zwei identische Kunststoffe vor.

Ebenfalls bevorzugt bestehen das Oberteil und das Unterteil zumindest im Bereich der stoffschlüssigen Verbindung aus einem Kunststoff, der kompatibel ist zu dem Kunststoff des Betriebsflüssigkeitsbehälters, insbesondere der Wand des Betriebsflüssigkeitsbehälters. Hierdurch wird vorteilhafter Weise eine besonders stabile und dichte Verbindung des erfindungsgemäßen Entlüftungsventils mit dem Betriebsflüssigkeitsbehälter gewährleistet. Noch bevorzugter handelt es sich bei allen drei Kunststoffen um ein HDPE.

Wie bereits zuvor beschrieben ist vorzugsweise innerhalb des Aufnahmevolumens ein Tropfenabscheider angeordnet. Der Tropfenabscheider dient zur Abscheidung von Betriebsflüssigkeit aus dem Luft-Gas-Gemisch (*liquid carry-over*)*.* Der Tropfenabscheider nutzt die höhere Trägheit der Flüssigkeitstropfen der Betriebsflüssigkeit gegenüber der geringeren Trägheit des sie mitführenden Gases. Hierzu wird das feuchte Luft-Gas-Gemisch durch Einbauten des Tropfenabscheiders geführt, in denen die Strömungsrichtung des feuchten Luft-Gas-Gemisches zumindest einfach, bevorzugt mehrfach umgelenkt wird. Die Flüssigkeitstropfen können diesen Richtungsänderungen nicht folgen, weshalb diese auf die Einbauten prallen und sich dort absetzen. Bei zunehmender Ablagerung der Tropfen fließen diese nach unten und werden somit im Aufnahmevolumen gesammelt.

Als Tropfenabscheider kommt jede geeignete Vorrichtung in Frage. Bevorzugt handelt es sich bei dem Tropfenabscheider um eine oder mehrere Prallflächen, bevorzugt solche mit einer Mehrzahl Elementen, wie Ecken, Knicken oder Kurven, die zu einer Richtungsänderung des an der Prallfläche vorbeiströmenden Luft-Gas-Gemisches führen. Besonders bevorzugt hat der Tropfenabscheider, bzw. die Prallfläche, einen labyrinthartigen, d.h. verwinkelten, Aufbau.

Weiter bevorzugt besteht der Tropfenabscheider aus einem Kunststoff, vorzugsweise einem HDPE. Ebenfalls bevorzugt besteht der Tropfenabscheider aus dem gleichen Kunststoff wie das Oberteil und/oder das Unterteil.

Noch bevorzugter ist der Tropfenabscheider Teil des Oberteils und/oder des Unterteils, insbesondere ist er dabei bevorzugt einstückig mit dem Oberteil und/oder dem Unterteil geformt. Demnach kann entweder das Oberteil oder das Unterteil, sowie jedoch bevorzugt auch das Oberteil und das Unterteil Elemente, bzw. Teilstücke des zumindest einen Tropfenabscheiders aufweisen. Beim Zusammensetzen von Oberteil mit dem Unterteil wird dann vorteilhafter Weise selbstständig der zumindest eine Tropfenabscheider gebildet.

Dies hat den Vorteil, dass der Tropfenabscheider nicht als weiteres Bauteil vor dem Verbinden von Oberteil und Unterteil eingesetzt werden muss, sondern durch das Verbinden von Oberteil und Unterteil automatisch und richtig positioniert gebildet wird. Am bevorzugtesten ist der Tropfenabscheider mit labyrinthartigen Strukturen einstückig mit dem Oberteil und dem Unterteil hergestellt. Vorteilhafterweise kann hierdurch ein besonders einfache Herstellung, ein einfaches Aufsetzen und eine exakte Positionierung gewährleistet werden, wobei die labyrinthartigen Strukturen von oben und von unten in das Aufnahmevolumen hineinragen.

Die sich im Aufnahmevolumen ansammelnde Betriebsflüssigkeit wird bevorzugt in den Innenraum des Betriebsflüssigkeitsbehälters zurückgeführt. Dies erfolgt weiter bevorzugt über die erste Lüftungsöffnung und/oder zweite Lüftungsöffnung in der Trennwand. Noch bevorzugter erfolgt die Rückführung über die erste Lüftungsöffnung in der Trennwand, da diese eine größere lichte Weite als die zweite Lüftungsöffnung aufweist.

Um die Rückführung der Betriebsflüssigkeit in den Innenraum des Betriebsflüssigkeitsbehälters zu erleichtern ist vorteilhafter Weise die Trennwand zumindest bereichsweise von dem Aufnahmevolumen weg gewölbt. In anderen Worten ist die Trennwand zum Aufnahmevolumen hin zumindest bereichsweise konkav gewölbt. Vorzugsweise liegt ein solcher gewölbte Bereich zumindest im Bereich der ersten Lüftungsöffnung und/oder der zweiten Lüftungsöffnung, bevorzugt im Bereich der ersten Lüftungsöffnung. Weiter bevorzugt weist die Trennwand über ihre gesamte Ausdehnung eine im Wesentlichen gleichmäßige Wölbung auf. Hierdurch wird ein verbessertes Ablaufverhalten der im Aufnahmevolumen angesammelten Betriebsflüssigkeit gewährleistet.

Vorzugsweise weist das erfindungsgemäße Entlüftungsventil weiterhin zumindest eine Sicherungseinrichtung zur Sicherung der Anordnung des ersten Ventilkörpers in dem ersten Ventilgehäuseinnenraum und/oder des zweiten Ventilkörpers in dem zweiten Ventilgehäuseinnenraum auf. Die Sicherungseinrichtung verschließt die erste Kommunikationsöffnung des ersten Ventilgehäuses und/oder die zweite Kommunikationsöffnung des zweiten Ventilgehäuses nicht fluiddicht, jedoch in einer Art, dass ein Herausgleiten der darin befindlichen Ventilkörper verhindert wird. Eine solche Sicherungseinrichtung kann beispielsweise auf einfache Art und Weise durch eine auf das Ventilgehäuse aufgesetzte Kappe mit Öffnungen für den Fluidaustausch bereitgestellt werden.

Bevorzugt ist die Sicherungseinrichtung als Kappe ausgeführt, insbesondere als eine aus Kunststoff - und weiter bevorzugt im Spritzgussverfahren - hergestellte Kappe. Weiter bevorzugt kann die Sicherungseinrichtung auf das erste Ventilgehäuse und/oder auf das zweite Ventilgehäuse aufgesetzt bzw. aufgesteckt werden. Ebenfalls bevorzugt ist die Sicherungseinrichtung kraftschlüssig und/oder formschlüssig mit dem Unterteil, bzw. dem ersten und/oder dem zweiten Ventilgehäuse verbunden. Hierzu kann bevorzugt die Sicherungseinrichtung und/oder das Unterteil, bzw. das erste und/oder das zweite Ventilgehäuse, ein Verbindungsmittel aufweisen, beispielsweise zumindest eine Rastnase, die in eine korrespondierende Vertiefung eingreift. Ebenfalls bevorzugt sind nach einem solchen Aufsetzen bzw. Aufstecken keine weiteren Verbindungsmittel nötig. Am bevorzugtesten ist das Verbindungsmittel einstückig mit dem Unterteil, bzw. dem ersten und/oder dem zweiten Ventilgehäuse und/oder der Sicherungseinrichtung hergestellt.

Weiter bevorzugt weist die Sicherungseinrichtung Öffnungen für den Fluidaustausch zwischen dem Betriebsflüssigkeitsbehälterinnenraum und einem Ventilgehäuseinnenraum auf. Besonders bevorzugt handelt es sich bei der Sicherungseinrichtung um eine Kappe, die gleichzeitig auf das erste und das zweite Ventilgehäuse aufgesetzt wird.

Vorzugsweise weist das erfindungsgemäße Entlüftungsventil weiterhin zumindest eine Abdeckeinrichtung zur Abdeckung und/oder zum Schutz des Oberteils auf. Nach dem bestimmungsgemäßen Einbau des Entlüftungsventils in einen Betriebsflüssigkeitsbehälter ist zumindest der nach oben ausgerichtete Bereich der Oberseite der Umgebung ausgesetzt. Insbesondere betrifft dies auch die vorzugsweise in dieser Oberseite des Oberteils angeordneten und zuvor beschriebenen Ausgangsöffnungen und Ventile (Überdruck- und/oder Unterdruckventil). Vorteilhafter Weise werden durch die Abdeckeinrichtung diese Komponenten geschützt.

Bevorzugt ist die Abdeckeinrichtung als Kappe ausgeführt, insbesondere als eine aus Kunststoff - und weiter bevorzugt im Spritzgussverfahren - hergestellte Kappe. Als Kunststoff für die Abdeckeinrichtung kommt bevorzugt HDPE, noch bevorzugter ein Zweikomponentenmaterial (2K-Material) zum Einsatz. Das Zweikomponentenmaterial weist bevorzugt einen Kern aus HDPE auf und eine diesen Kern umgebende Außenschicht aus Polyamid. Durch das HDPE wird vorteilhafterweise die Möglichkeit einer Verschweißung der Abdeckeinheit mit einem kompatiblen Material (beispielsweise der dem Oberteil des Entlüftungsventils) gewährleistet, die Außenschicht aus Polyamid verhindert vorteilhafterweise eine Permeation.

Weiter bevorzugt kann die Abdeckeinrichtung auf den bei bestimmungsgemäßem Einbau des Entlüftungsventils in den Betriebsflüssigkeitsbehälter nicht im Betriebsflüssigkeitsbehälterinnenraum angeordneten Bereich des Oberteils aufgesetzt bzw. aufgesteckt werden. Ebenfalls bevorzugt ist die Abdeckeinrichtung kraftschlüssig, stoffschlüssig und/oder formschlüssig mit dem Oberteil verbunden. Hierzu kann bevorzugt die Abdeckeinrichtung und/oder das Oberteil ein Verbindungsmittel aufweisen, beispielsweise zumindest eine Rastnase, die in eine korrespondierende Vertiefung eingreift. Ebenfalls bevorzugt sind nach einem solchen Aufsetzen bzw. Aufstecken keine weiteren Verbindungsmittel nötig. Am bevorzugtesten ist das Verbindungsmittel einstückig mit dem Oberteil und/oder der Abdeckeinrichtung hergestellt. Auch eine Verschweißung der Abdeckeinrichtung mit dem Oberteil ist möglich und, wie oben beschrieben, bei einer Abdeckeinrichtung aus HDPE oder 2k-Material vorteilhaft.

Weiter bevorzugt weist die Abdeckeinrichtung Öffnungen für den Fluidaustausch mit der Umgebung auf.

Die Abdeckeinrichtung kann weiterhin mit einem Aktivkohlefilter verbindbar sein. Dies ist insbesondere für Betriebsflüssigkeitsbehälter von Vorteil, die Benzin enthalten, beispielsweise Kraftstofftanks.

Die vorliegende Erfindung betrifft ebenfalls einen Betriebsflüssigkeitsbehälter aufweisend das erfindungsgemäße und zuvor beschriebene Entlüftungsventil. Demnach gelten alle zuvor für das Entlüftungsventil beschriebene Merkmale gleichsam auch für den Betriebsflüssigkeitsbehälter.

Besonders bevorzugt ist das erfindungsgemäße Entlüftungsventil fluiddicht mit der Wand des Betriebsflüssigkeitsbehälters verbunden. Noch bevorzugter ist das Entlüftungsventil hierbei mit der Außenwand des Betriebsflüssigkeitsbehälters verbunden. Bei der fluiddichten Verbindung kann es sich ebenfalls beispielsweise und bevorzugt um eine stoffschlüssige Verbindung handeln. Besonders bevorzugt wird das erfindungsgemäße Entlüftungsventil hierbei mit der Wand, bzw. der Au-ßenwand, des Betriebsflüssigkeitsbehälters verschweißt.

Die zuvor beschrieben einzelnen Ausführungsformen der Erfindung sind frei miteinander kombinierbar, solange nicht explizit etwas Gegenteiliges ausgeführt wurde, oder ein offensichtlicher Ausschluss entgegensteht.

Weitere Vorteile, Einzelheiten und Merkmale der Erfindung ergeben sich nachfolgend aus den erläuterten Ausführungsbeispielen. Dabei zeigen im Einzelnen:
- Figur 1:: eine schematische Ansicht des erfindungsgemäßen Entlüftungsventils;
- Figur 2A:: eine schematische Ansicht des Unterteils des erfindungsgemäßen Entlüftungsventils, mit Blickrichtung auf dessen Oberseite;
- Figur 2B:: eine weitere schematische Ansicht des Unterteils des erfindungsgemäßen Entlüftungsventils, mit Blickrichtung auf dessen Unterseite;
- Figur 3A:: eine schematische Ansicht des Oberteils des erfindungsgemäßen Entlüftungsventils, mit Blickrichtung auf dessen Oberseite;
- Figur 3B:: eine weitere schematische Ansicht des Oberteils des erfindungsgemäßen Entlüftungsventils, mit Blickrichtung auf dessen Unterseite;
- Figur 4:: eine weitere schematische Ansicht des erfindungsgemäßen Entlüftungsventils mit aufgesteckter Abdeckeinrichtung;
- Figur 5:: eine schematische Ansicht eines Längsschnitts durch einen erfindungsgemäßen Betriebsflüssigkeitsbehälter mit mehrschichtiger Wand und wobei das erfindungsgemäße Entlüftungsventil eine aufgesteckte Abdeckeinrichtung und Sicherungseinrichtung aufweist.

In der nun folgenden Beschreibung bezeichnen gleiche Bezugszeichen gleiche Bauteile bzw. gleiche Merkmale, so dass eine in Bezug auf eine Figur durchgeführte Beschreibung bezüglich eines Bauteils auch für die anderen Figuren gilt, so dass eine wiederholende Beschreibung vermieden wird.

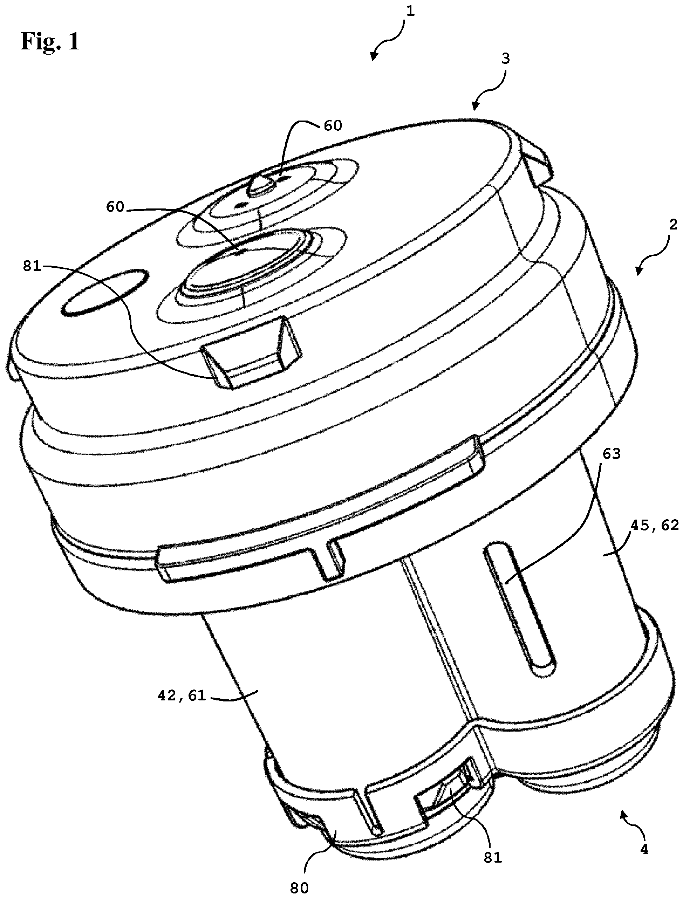

Figur 1 zeigt eine schematische Ansicht des erfindungsgemäßen Entlüftungsventils (1) für einen SCR-Behälter, welches ein Gehäuse (2) aufweist, das aus einem Oberteil (3) sowie einem damit verbundenen Unterteil (4) besteht. Das Oberteil (3) ist in der dargestellten Ansicht kraft- und formschlüssig mit dem Unterteil (4) verbunden und bereit für den Einbau in einen SCR-Behälter, mit dessen Außenwand es zur Herstellung einer stoffschlüssigen und fluiddichten Verbindung verschweißbar ist. Das Oberteil (3), sowie auch das Unterteil (4) wurden im Spritzgussverfahren aus einem HDPE hergestellt.

Wie der Figur 1 weiterhin zu entnehmen ist, weist das Oberteil (3) zwei Ausgangsöffnungen (60) auf, die als Überdruckventil, sowie Unterdruckventil ausgeführt sind und eine Fluidverbindung zur Umgebung (94) darstellen. Hierzu wurden, wie zu erkennen ist, Schirmpilzventile verwendet, um die Ausgangsöffnungen (60) zu verschließen. Das Überdruckventil hat einen Öffnungsdruck von ungefähr 10 mbar, dass Unterdruckventil weist einen Öffnungsdruck von etwa -20 mbar auf.

Das Oberteil (3) weist weiterhin mehrere Rastnasen (81) auf, welche zur Verbindung des Oberteils (3) mit einer als Kappe ausgeführten Abdeckeinrichtung (nicht in Fig. 1 dargestellt) dienen.

Das Unterteil (4) weist zwei im Wesentlichen hohlzylinderförmig ausgestaltete Ventilgehäuse, nämlich ein erstes Ventilgehäuse (42) und ein zweites Ventilgehäuse (45) auf, wobei das erste Ventilgehäuse (42) eine erste Mantelfläche (61) aufweist und das zweite Ventilgehäuse (45) eine zweite Mantelfläche (62) aufweist. Beide Ventilgehäuse (42,45), bzw. deren Innenräume weisen je zumindest eine Kommunikationsöffnung (nicht in Fig. 1 dargestellt, sondern durch die Sicherungseinrichtung (80) verdeckt) auf, die zum Fluidaustausch mit dem Betriebsflüssigkeitsbehälterinnenraum dienen. Diese Kommunikationsöffnungen sind an der in Figur 1 dargestellten Unterseite der beiden Ventilgehäuse angeordnet und entsprechen im Wesentlichen den Stirnseiten der beiden hohlzylinderförmig ausgestalteten Ventilgehäuse.

Wie zu erkennen ist, ist die Mantelfläche (61) des ersten Ventilgehäuses (42) durchgängig ausgeführt und weist keinerlei Öffnungen oder Durchbrüche auf. Demgegenüber weist die Mantelfläche (62) des zweiten Ventilgehäuses (45) eine schlitzförmig ausgestaltete weitere Kommunikationsöffnung (63) auf, über die das zweite Ventilgehäuse (45), bzw. dessen Innenraum mit dem Innenraum des Betriebsflüssigkeitsbehälters fluidverbindbar ist. Diese dritte Kommunikationsöffnung (63) hat eine Größe von ungefähr 19 mm².

In der Figur 1 weiterhin zu erkennen ist eine Sicherungseinrichtung (80), die in Form einer Kappe aus einem Kunststoff ausgeführt ist, die auf das Unterteil (4) aufgesteckt ist und ein Herausgleiten der beiden in den Ventilgehäusen (42,45) angeordneten Ventilkörper (nicht dargestellt) verhindert. Die Kappe (80) wurde im Spritzgussverfahren hergestellt und ist über mehrere Rastnasen (81), die einstückig im Spritzgussverfahren mit dem Unterteil (4) hergestellt wurden an dem Unterteil (4) befestigt.

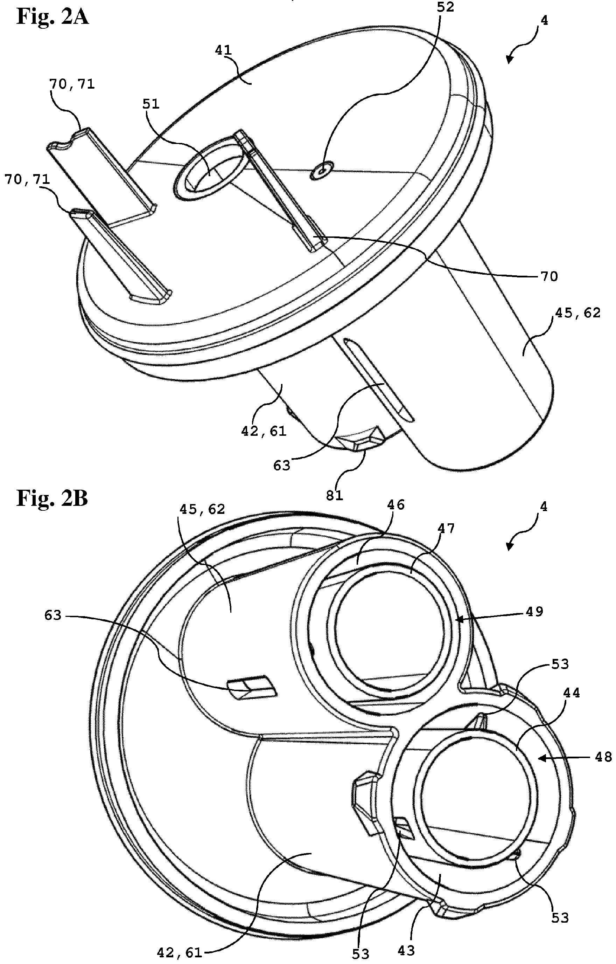

Die Figur 2 (Figur 2A und 2B) zeigt eine schematische Ansicht des im Spritzgussverfahren hergestellten Unterteils (4) des erfindungsgemäßen Entlüftungsventils (1), wobei Figur 2A mit Blickrichtung auf die Oberseite und Figur 2B mit Blickrichtung auf die Unterseite des Unterteils (4) ausgeführt ist.

In Figur 2A werden insbesondere drei einstückig mit dem Unterteil (4) hergestellte Prallflächen (71) dargestellt, die als Teil des Tropfenabscheiders (70) des erfindungsgemäßen Entlüftungsventils (1) dienen. Weiterhin zu erkennen sind die erste Lüftungsöffnung (51) und die zweite Lüftungsöffnung (52), mittels der das später gebildete Aufnahmevolumen (31) und der erste, bzw. zweite Ventilgehäuseinnenraum (43,46) miteinander fluidverbindbar sind. Die beiden kreisförmig ausgestalteten Lüftungsöffnungen (51,52) sind in der Oberseite des in Figur 2A dargestellten Unterteils (4), genauer in der Trennwand (41) angeordnet.

Weiterhin ist die lichte Weite der ersten Lüftungsöffnung (51) größer als die der zweiten Lüftungsöffnung (52). Genauer gesagt beträgt die lichte Weite der zweiten Lüftungsöffnung (52) ungefähr 1 mm, während die lichte Weite der ersten Lüftungsöffnung (51) ungefähr 10 mm beträgt.

Erneut zu erkennen ist, dass das Unterteil (4) ein erstes und ein zweites Ventilgehäuse (42,45) aufweist, die ihrerseits jeweils eine Mantelfläche (61,62) aufweisen. Lediglich die Mantelfläche des zweiten Ventilgehäuses (62) weist eine weitere Kommunikationsöffnung (63) auf, die schlitzförmig ausgestaltet ist. Darüber hinaus weist das erste Ventilgehäuse (42) eine erste Kommunikationsöffnung (48) und das zweite Ventilgehäuse (45) eine zweite Kommunikationsöffnung (49) auf, die jeweils einen Fluidaustausch zwischen dem ersten bzw. zweiten Ventilgehäuseinnenraum (43,46) und dem nicht dargestellten Betriebsflüssigkeitsbehälterinnenraum (91) ermöglichen.

Ebenfalls erneut zu erkennen ist eine der mehreren Rastnasen (81), die einstückig mit dem ersten Ventilgehäuse (42) geformt wurde und zur kraft- und formschlüssigen Verbindung mit der nicht dargestellten Sicherungseinrichtung (80) dient.

In der in Figur 2B dargestellten Ansicht des Unterteils (4) werden die beiden Ventilkörper (44,47) erkennbar, die lageveränderlich in den beiden hohlzylinderförmigen Ventilgehäusen (42,45), bzw. deren Innenräumen (43,46) angeordnet sind. Der erste, als auch der zweite Ventilkörper (44,47) ist als Becher förmiger Hohlkörper aus einem Kunststoff hergestellt und weist insgesamt sechs Abstandhalter (53) zur Zentrierung des Ventilkörpers im Ventilgehäuseinnenraum (43,46) auf, wobei jeweils drei der sechs Abstandhalter (53) mit einem Winkelabstand von 120° auf der Umhüllenden des Ventilkörpers angeordnet sind.

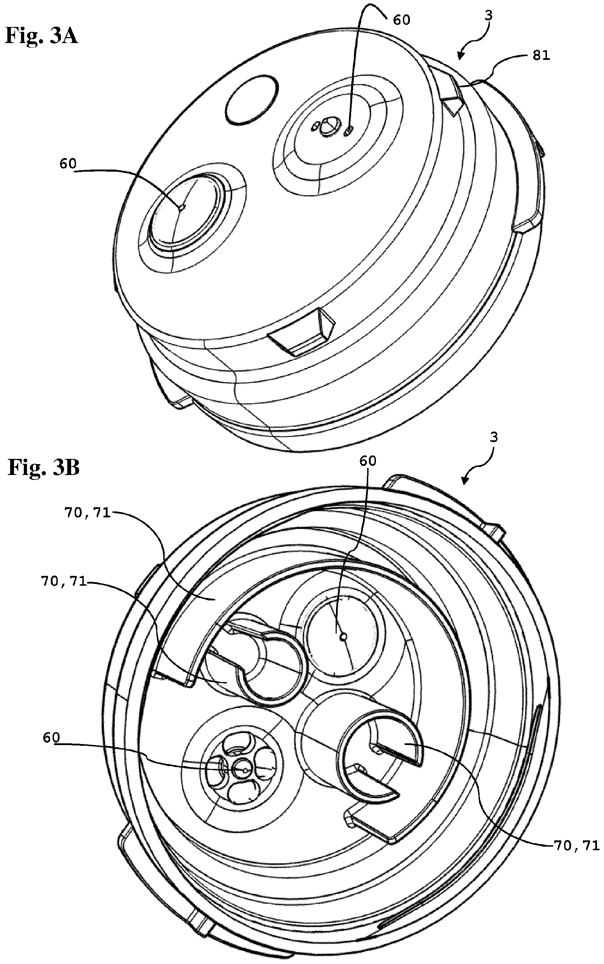

Die Figur 3 (Figur 3A und 3B) zeigt eine schematische Ansicht des im Spritzgussverfahren hergestellten Oberteils (3) des erfindungsgemäßen Entlüftungsventils (1), wobei Figur 3A mit Blickrichtung auf die Oberseite und Figur 3B mit Blickrichtung auf die Unterseite des Oberteils (3) ausgeführt ist.

Im Einzelnen zeigt die Figur 3A erneut zwei der mehreren Rastnasen (81), die einstückig mit dem Oberteil (3) hergestellt wurden und zur kraft- und formschlüssigen Verbindung des Oberteils (3) mit der Abdeckeinrichtung (82) dienen.

Weiterhin zu erkennen sind die beiden Ausgangsöffnungen (60), d.h. das durch Einsatz von Schirmpilzventilen erzeugte Überdruck- und Unterdruckventil.

Die Figur 3B zeigt ebenfalls die beiden Ausgangsöffnungen (60), sowie die darin angeordneten Schirmpilzventile, die diese Ausgangsöffnungen (60) verschließen, um ein Überdruckventil, bzw. ein Unterdruckventil bereitzustellen. Weiterhin werden ebenfalls Prallflächen (71) gezeigt, die einer kreissegmentartige Ausgestaltung aufweisen und - wie auch die Prallflächen (71) des Unterteils (4) - als Teil des Tropfenabscheiders (70) des Entlüftungsventils (1) dienen. Wie auch im Fall des Unterteils (4) sind die Prallflächen (71) des Oberteils (3) ebenfalls einstückig mit dem Oberteil (3) geformt.

Mit dem Zusammensetzen, bzw. Verbinden des Oberteils (3) mit dem Unterteil (4) und damit der Ausbildung des Gehäuses (2), sowie des Aufnahmevolumens (31) des erfindungsgemäßen Entlüftungsventils (1) wird innerhalb des Aufnahmevolumens (31) durch das Zusammenwirken der Prallflächen (71) des Oberteils (3) und des Unterteils (4) der Tropfenabscheider (70) gebildet.

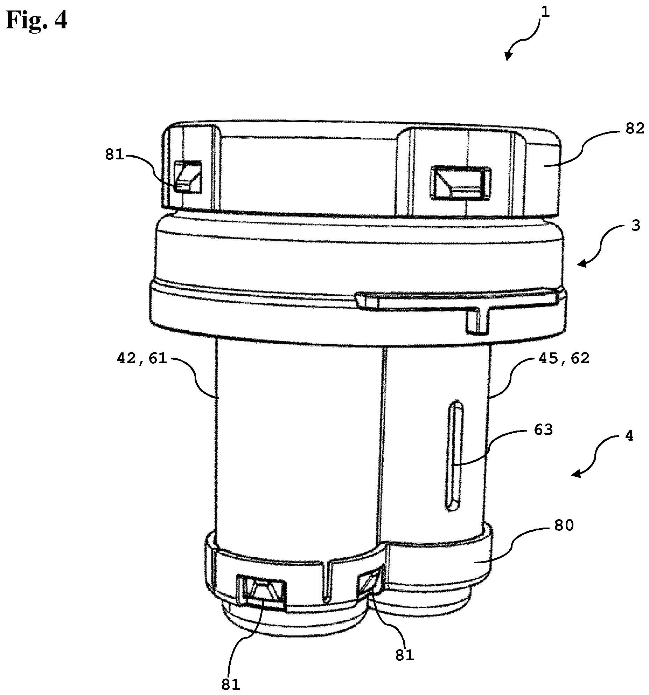

Figur 4 zeigt eine weitere schematische Ansicht des erfindungsgemäßen Entlüftungsventils (1) wobei dieses jedoch weiterhin eine aufgesteckte Abdeckeinrichtung (82) aufweist. Die als Kappe ausgeführte Abdeckeinrichtung (82) besteht aus Kunststoff und ist über die Rastnasen (81) des Oberteils (3) sicher mit diesem verbunden, ohne jedoch den Fluidaustausch mit der Umgebung (94) zu verhindern.

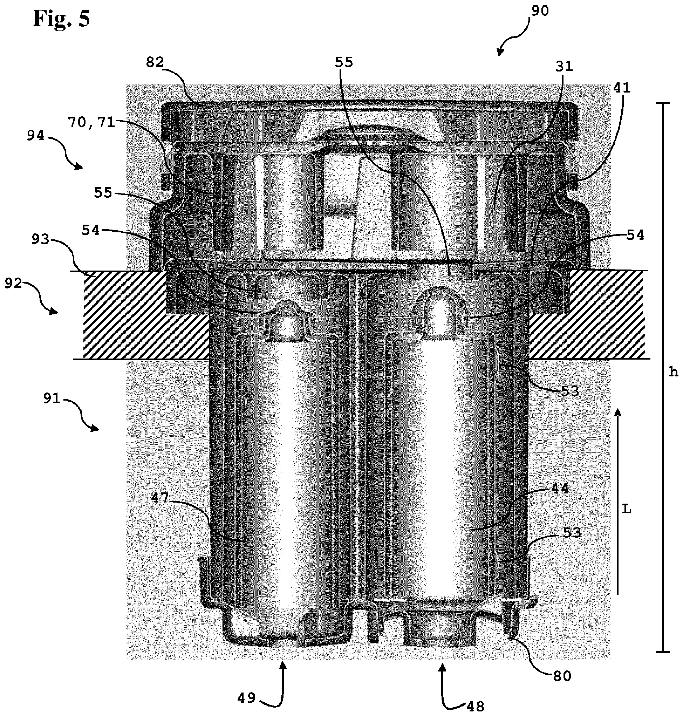

Die Figur 5 zeigt eine schematische Ansicht eines Längsschnitts durch den erfindungsgemäßen Betriebsflüssigkeitsbehälter (90), wobei dieser das erfindungsgemäße Entlüftungsventil (1) aufweist, welches durch Verschweißen stoffschlüssig mit der Außenwand (93) der Wand (92) des SCR-Behälters (90) verbunden ist. Wie aus der Figur 5 zu entnehmen ist, treffen damit im Bereich des Verschweißens die Materialien des Oberteils (3), des Unterteils (4) und der Außenwand (93) des Betriebsflüssigkeitsbehälters (90) zusammen und gehen eine stoffschlüssige Verbindung ein. Hierzu müssen die Materialien der drei zuvor genannten Elemente aus kompatiblen Kunststoffen bestehen. Im vorliegenden Fall bestehen diese aus HDPE. Hierdurch wird vorteilhafter Weise eine besonders fluiddichte und gleichzeitig die sichere Verbindung gewährleistet.

Zu erkennen ist insbesondere die Trennwand (41), die einstückig mit dem Unterteil (4) gebildet ist und bei dem Verbinden von Oberteil (3) und dem Unterteil (4) ein Aufnahmevolumen (31) begrenzt, welches zur Aufnahme von aus dem entweichenden Luft-Gas-Gemisch enthaltener Betriebsflüssigkeit geeignet ist. Das Aufnahmevolumen (31) weist eine Größe von ungefähr 30 ml auf.

Wie in Zusammenschau der Figur 5 mit der Figur 2A zu erkennen ist, ist diese Trennwand tellerförmig ausgestaltet, d.h. sie weist keinerlei Stufen oder Abstufungen auf, sondern hat eine im Wesentlichen plane bzw. ebene Ausgestaltung. Weiterhin ist der Figur 5 zu entnehmen, dass die Trennwand (41) über ihre gesamte Ausdehnung eine leichte und im Wesentlichen gleichmäßige Wölbung aufweist, die vom Aufnahmevolumen (31) weg weist.

In der Trennwand (41) angeordnet sind weiterhin die beiden Lüftungsöffnungen (51,52) des ersten, bzw. zweiten Ventilgehäuses (42,45) zu erkennen, welche die Trennwand (41) durchbrechen und damit das Aufnahmevolumen (31) mit dem ersten Ventilgehäuseinnenraum (43), bzw. dem zweiten Ventilgehäuseinnenraum (46) fluidverbinden. Die beiden Lüftungsöffnungen (51,52) weisen weiterhin Ventilsitze (55) auf, die weiter unten beschrieben werden.

Weiterhin in der Figur 5 zu erkennen sind die beiden Ventilkörper (44,47), die lageveränderlich und durch die Abstandhalter (53) zentriert in den beiden Ventilgehäusen in (42,45), bzw. den beiden Ventilgehäuseinnenräumen (43,46) angeordnet sind. An den in Richtung der Lüftungsöffnungen (51,52) weisenden Enden der als becherförmiger Hohlkörper ausgestalteten Ventilkörper (44,47) sind weiterhin scheibenförmige elastomere Dichtungen angeordnet. Diese wirken mit den Ventilsitzen (55) zusammen und verschließen sicher und effizient die Lüftungsöffnungen (51,52) in der Trennwand (41), wenn die Ventilkörper (44,47) durch einen ansteigenden Betriebsflüssigkeitsspiegel ausreichend angehoben werden.

An der Stirnseite des ersten Ventilgehäuses (42), bzw. des zweiten Ventilgehäuses (45) befindet sich die erste Kommunikationsöffnung (48), bzw. die zweite Kommunikationsöffnung (49). Über diese beiden Kommunikationsöffnungen (48,49) wird ein Fluidaustausch zwischen den beiden Ventilgehäuseinnenräumen (43,46) mit dem Betriebsflüssigkeitsbehälterinnenraum (91) erreicht.

Weiterhin zu erkennen ist die auf die Unterseite des Unterteils (4) aufgesetzte Sicherungseinrichtung (80), die ein Herausgleiten der beiden Ventilkörper (44,47) aus den Ventilgehäuseinnenräumen (43,46) verhindert.

Der Figur 5 weiterhin zu entnehmen ist, weist das erfindungsgemäße Entlüftungsventil (1) eine Längserstreckung (L), sowie eine sich bezüglich dieser Längserstreckung (L) ergebende Gehäusehöhe (h).

Beim Betanken des Betriebsflüssigkeitsbehälters (90) gelangt die Betriebsflüssigkeit in den Betriebsflüssigkeitsbehälterinnenraum (91) und verdrängt beim Ansteigen die hierin befindliche Luft, bzw. das hierin befindliche Luft-Gas-Gemisch. Das so verdrängte Volumen der Luft, bzw. des Luft-Gas-Gemisches tritt zunächst über die Öffnungen in der Sicherungseinrichtung (80) und die erste sowie die zweite Kommunikationsöffnung (48,49) in die beiden Ventilgehäuseinnenräume (43,46) ein. Es strömt dann innerhalb der beiden Ventilgehäuseinnenräume (43,46) an den beiden Ventilkörpern (44,47) vorbei und verlässt das Unterteil (4) des Entlüftungsventils (1) über die beiden in der Trennwand (41) befindlichen Lüftungsöffnungen (51,52) .

Nach dem Verlassen des Unterteils (4) gelangt das verdrängte Luft-Gas-Gemisch in das Aufnahmevolumen (31) und wird mittels der hierin angeordneten labyrinthartigen Strukturen des Tropfenabscheiders (70) mehrfach umgelenkt, wobei die in dem Luft-Gas-Gemisch enthaltende Betriebsflüssigkeit an den Prallflächen (71) des Tropfenabscheiders (70) abgeschieden wird und an diesen in Richtung der Trennwand (41) hinabläuft. Hierdurch wird in vorteilhafter Art und Weise ein Austreten von Betriebsflüssigkeit aus dem Betriebsflüssigkeitsbehälterinnenraum (91) in die Umgebung (94) wirksam vermieden.

Das nach der Abscheidung von der Betriebsflüssigkeit gereinigte aus dem Betriebsflüssigkeitsbehälterinnenraum (91) verdrängte Gasvolumen sammelt sich so lange in dem Aufnahmevolumen (31), bis der Öffnungsdruck von ungefähr 10 mbar des Überdruckventils in der einen der beiden Ausgangsöffnungen (60) erreicht wird und das verdrängte Gasvolumen in die Umgebung (94) abgegeben wird.

Umgekehrt verringert sich beim Betrieb des Kraftfahrzeugs der Druck im Betriebsflüssigkeitsbehälterinnenraum (91), da Betriebsflüssigkeit entnommen wird. Wird der Öffnungsdruck von ungefähr -20 mbar erreicht, so wird das Unterdruckventil in der anderen der beiden Ausgangsöffnungen (60) geöffnet und Luft aus der Umgebung (94) strömt zum Druckausgleich in den Betriebsflüssigkeitsbehälterinnenraum (91) ein.

Die wie zuvor beschrieben abgeschiedene Betriebsflüssigkeit läuft dann durch die erste, bzw. zweite Lüftungsöffnung (51,52) durch die beiden Ventilgehäuseinnenräume (43,46) und die Kommunikationsöffnungen (51,52) zurück in den Betriebsflüssigkeitsbehälterinnenraum (91). Dies wird weiterhin dadurch begünstigt, dass die Trennwand (41) zum Aufnahmevolumen (31) hin konkav gewölbt ist und somit die abgeschiedene Betriebsflüssigkeit leichter zu den beiden in der Trennwand (41) angeordneten Lüftungsöffnungen (51,52) gelangen kann.

Steigt nun der Betriebsflüssigkeitsspiegel innerhalb des Betriebsflüssigkeitsbehälterinnenraums (91) immer weiter an, so wird zunächst der erste Ventilkörper (44) in seiner Lage verändert und angehoben, sodass schließlich die Dichtung (54) den Ventilsitz (55) und somit die erste Lüftungsöffnung (51) verschließt.

Da nun das verdrängte Volumen des Luft-Gas-Gemisches nicht mehr durch beide Lüftungsöffnungen (51,52) entweichen kann, kommt es zu einem Rückstau, bzw. einem Druckanstieg, worauf hin in einer dem Fachmann bekannten Art und Weise die Abschaltung des Betankungsvorgangs erfolgt.

Da die zweite Lüftungsöffnung mit der geringeren lichten Weite (52) jedoch zunächst unverschlossen ist, wird der Druckanstieg langsam abgebaut und die Fortsetzung des Betankungsvorgangs wird ermöglicht.

Steigt nun der Betriebsflüssigkeitsspiegel innerhalb des Betriebsflüssigkeitsbehälters (90) immer weiter an, so fließt schließlich Betriebsflüssigkeit über die dritte Kommunikationsöffnung (63) in den zweiten Ventilgehäuseinnenraum (46). Hierdurch wird der zweite Ventilkörper (47) angehoben und dessen elastomere Dichtung (54) verschließt den Ventilsitz (55) der zweiten Lüftungsöffnung (52) permanent. Infolgedessen wird eine weitere Fortsetzung des Betankungsvorgangs verhindert.

### Bezugszeichenliste

- 1: Ent- und/oder Belüftungsventil
- 2: Gehäuse
- 3: Oberteil
- 4: Unterteil
- 31: Aufnahmevolumen
- 41: Trennwand
- 42: Erstes Ventilgehäuse
- 43: Erster Ventilgehäuseinnenraum
- 44: Erster Ventilkörper
- 45: Zweites Ventilgehäuse
- 46: Zweiter Ventilgehäuseinnenraum
- 47: Zweiter Ventilkörper
- 48: Erste Kommunikationsöffnung
- 49: Zweite Kommunikationsöffnung
- 51: Erste Lüftungsöffnung
- 52: Zweite Lüftungsöffnung
- 53: Abstandhalter
- 54: Dichtung
- 55: Ventilsitz
- 60: Ausgangsöffnung
- 61: Mantelfläche des ersten Ventilgehäuses
- 62: Mantelfläche des zweiten Ventilgehäuses
- 63: Dritte Kommunikationsöffnung
- 70: Tropfenabscheider
- 71: Prallfläche
- 80: Sicherungseinrichtung
- 81: Rastnase
- 82: Abdeckeinrichtung
- 90: Betriebsflüssigkeitsbehälter, SCR-Behälter
- 91: Betriebsflüssigkeitsbehälterinnenraum
- 92: Wand des Betriebsflüssigkeitsbehälters
- 93: Außenwand des Betriebsflüssigkeitsbehälters
- 94: Umgebung

- L: Längserstreckung des Gehäuses
- h: Gehäusehöhe

## Patentansprüche

1. Ent- und/oder Belüftungsventil (1) für einen Betriebsflüssigkeitsbehälter mit den folgenden Merkmalen:
- das Ent- und/oder Belüftungsventil weist ein Gehäuse (2) mit einem Oberteil (3) und einem Unterteil (4) auf;
- das Unterteil ist mit dem Oberteil derart verbindbar, dass das Gehäuse ein Aufnahmevolumen (31) aufweist, welches durch eine zwischen dem Oberteil und dem Unterteil gebildete Trennwand (41) begrenzt ist;
- das Unterteil weist zumindest ein erstes Ventilgehäuse (42) mit einem ersten Ventilgehäuseinnenraum (43) und ein zweites Ventilgehäuse (45) mit einem zweiten Ventilgehäuseinnenraum (46) auf, wobei in dem ersten Ventilgehäuseinnenraum ein erster Ventilkörper (44) und in dem zweiten Ventilgehäuseinnenraum ein zweiter Ventilkörper (47) lageveränderlich angeordnet ist;
- das erste Ventilgehäuse weist eine erste Kommunikationsöffnung (48) zum Fluidaustausch zwischen dem ersten Ventilgehäuseinnenraum und einem Betriebsflüssigkeitsbehälterinnenraum (91) auf;
- das zweite Ventilgehäuse weist eine zweite Kommunikationsöffnung (49) zum Fluidaustausch zwischen dem zweiten Ventilgehäuseinnenraum und dem Betriebsflüssigkeitsbehälterinnenraum auf;
- in der Trennwand ist eine erste Lüftungsöffnung (51), mittels der das Aufnahmevolumen und der erste Ventilgehäuseinnenraum fluidverbindbar sind, und eine zweite Lüftungsöffnung (52), mittels der das Aufnahmevolumen und der zweite Ventilgehäuseinnenraum fluidverbindbar sind, angeordnet; und
- die erste Lüftungsöffnung und die zweite Lüftungsöffnung sind bezüglich der Längserstreckung (L) des Gehäuses im Wesentlichen in einer gleichen Gehäusehöhe (h) angeordnet,
**dadurch gekennzeichnet, dass**
das Oberteil (3) zumindest eine Ausgangsöffnung (60) aufweist, welche die Wandung des Oberteils durchbricht und eine Fluidverbindung von dem Aufnahmevolumen (31) zur Umgebung (94) darstellt, und
wobei die Ausgangsöffnung (60) ein Überdruck- und/oder Unterdruckventil aufweist.

2. Ent- und/oder Belüftungsventil nach Anspruch 1, **dadurch gekennzeichnet, dass** das Oberteil zumindest zwei Ausgangsöffnungen (60) aufweist, wobei eine erste Ausgangsöffnung (60) ein Überdruckventil aufweist und eine zweite Ausgangsöffnung (60) ein Unterdruckventil aufweist und
wobei die Trennwand (41) durch eine Wand des Unterteils (4) gebildet wird.

3. Ent- und/oder Belüftungsventil nach zumindest einem der vorstehenden Ansprüche, **dadurch gekennzeichnet, dass** die lichte Weite der ersten Lüftungsöffnung größer ist als die lichte Weite der zweiten Lüftungsöffnung.

4. Ent- und/oder Belüftungsventil nach zumindest einem der vorstehenden Ansprüche, **dadurch gekennzeichnet, dass** das erste Ventilgehäuse eine durchgängige Mantelfläche (61) aufweist.

5. Ent- und/oder Belüftungsventil nach zumindest einem der vorstehenden Ansprüche, **dadurch gekennzeichnet, dass** das zweite Ventilgehäuse zumindest eine dritte Kommunikationsöffnung (63) zum Fluidaustausch zwischen dem zweiten Ventilgehäuseinnenraum und dem Betriebsflüssigkeitsbehälterinnenraum aufweist.

6. Ent- und/oder Belüftungsventil nach zumindest einem der vorstehenden Ansprüche, **dadurch gekennzeichnet, dass** Oberteil und Unterteil formschlüssig und/oder kraftschlüssig, oder stoffschlüssig miteinander verbunden sind.

7. Ent- und/oder Belüftungsventil nach Anspruch 6, **dadurch gekennzeichnet, dass** Ober- und Unterteil durch eine fluiddichte Verbindung verbunden sind.

8. Ent- und/oder Belüftungsventil nach Anspruch 7, **dadurch gekennzeichnet, dass** das Oberteil, das Unterteil und der Betriebsflüssigkeitsbehälter fluiddicht und stoffschlüssig miteinander verbindbar sind.

9. Ent- und/oder Belüftungsventil nach zumindest einem der vorstehenden Ansprüche, **dadurch gekennzeichnet, dass** innerhalb des Aufnahmevolumens ein Tropfenabscheider (70) angeordnet ist.

10. Ent- und/oder Belüftungsventil nach Anspruch 9, **dadurch gekennzeichnet, dass** der Tropfenabscheider zumindest eine Prallfläche (71) mit labyrinthartiger Struktur aufweist.

11. Ent- und/oder Belüftungsventil nach einem der Ansprüche 9 oder 10, **dadurch gekennzeichnet, dass** der Tropfenabscheider einstückig mit dem Oberteil und/oder dem Unterteil hergestellt ist.

12. Ent- und/oder Belüftungsventil nach zumindest einem der vorstehenden Ansprüche, **dadurch gekennzeichnet, dass** die Trennwand zumindest bereichsweise von dem Aufnahmevolumen weg gewölbt ist.

13. Ent- und/oder Belüftungsventil nach zumindest einem der vorstehenden Ansprüche weiterhin aufweisend zumindest eine Sicherungseinrichtung (80) zur Sicherung der Anordnung des ersten Ventilkörpers in dem ersten Ventilgehäuseinnenraum und/oder des zweiten Ventilkörpers in dem zweiten Ventilgehäuseinnenraum.

14. Betriebsflüssigkeitsbehälter (90) aufweisend ein Ent- und/oder Belüftungsventil nach zumindest einem der vorstehenden Ansprüche.

15. Betriebsflüssigkeitsbehälter nach Anspruch 14, wobei das Ent- und/oder Belüftungsventil mit der Außenwand (93) des Betriebsflüssigkeitsbehälters fluiddicht verbunden ist.

## Claims

1. A purging and/or ventilation valve (1) for an operating liquid container having the following features:
- the purging and/or ventilation valve comprises a housing (2) with an upper part (3) and a lower part (4);
- the lower part is connectable to the upper part in such a manner that the housing comprises a receiving volume (31) which is defined by a partition wall (41) formed between the upper part and the lower part;
- the lower part comprises at least one first valve housing (42) with a first valve housing interior (43) and a second valve housing (45) with a second valve housing interior (46), wherein a first valve body (44) is arranged in the first valve housing interior so as to be positionally changeable and a second valve body (47) is arranged in the second valve housing interior so as to be positionally changeable;
- the first valve housing comprises a first communication opening (48) for fluid exchange between the first valve housing interior and an operating liquid container interior (91);
- the second valve housing comprises a second communication opening (49) for fluid exchange between the second valve housing interior and the operating liquid container interior
- a first ventilation opening (51), by means of which the receiving volume and the first valve housing interior are fluidically connectable, and a second ventilation opening (52), by means of which the receiving volume and the second valve housing interior are fluidically connectable, are arranged in the partition wall; and
- the first ventilation opening and the second ventilation opening are arranged substantially at an identical housing height (h) with reference to the longitudinal extension (L) of the housing,
- **characterized in that**
the upper part (3) comprises at least one output opening (60) which interrupts the wall of the upper part and provides a fluid connection from the receiving volume (31) to the surrounding area (94), and
wherein the output opening (60) comprises an overpressure and/or negative pressure valve.

2. The purging and/or ventilation valve as claimed in claim 1, **characterized in that** the upper part comprises at least two output openings (60), wherein a first output opening (60) comprises an overpressure valve and a second output opening (60) comprises a negative pressure valve and
wherein the partition wall (41) is formed by a wall of the lower part (4).

3. The purging and/or ventilation valve as claimed in at least one of the preceding claims, **characterized in that** the inside dimension of the first ventilation opening is greater that the inside dimension of the second ventilation opening.

4. The purging and/or ventilation valve as claimed in at least one of the preceding claims, **characterized in that** the first valve housing comprises a continuous shell surface (61).

5. The purging and/or ventilation valve as claimed in at least one of the preceding claims, **characterized in that** the second valve housing comprises at least one third communication opening (63) for fluid exchange between the second valve housing interior and the operating liquid container interior.

6. The purging and/or ventilation valve as claimed in at least one of the preceding claims, **characterized in that** upper part and lower part are connected together in a positive locking and/or non-positive locking manner, or in a substance-to-substance bond.

7. The purging and/or ventilation valve as claimed in claim 6, **characterized in that** upper and lower parts are connected by a fluid-tight connection.

8. The purging and/or ventilation valve as claimed in claim 7, **characterized in that** the upper part, the lower part and the operating liquid container are connectable together in a fluid-tight manner and in a substance-to-substance bond.

9. The purging and/or ventilation valve as claimed in at least one of the preceding claims, **characterized in that** a droplet separator (70) is arranged inside the receiving volume.

10. The purging and/or ventilation valve as claimed in claim 9, **characterized in that** the droplet separator comprises at least one impact surface (71) with a labyrinth-type structure.

11. The purging and/or ventilation valve as claimed in either of claims 9 and 10, **characterized in that** the droplet separator is produced in one piece with the upper part and/or the lower part.

12. The purging and/or ventilation valve as claimed in at least one of the preceding claims, **characterized in that** the partition wall is arched away from the receiving volume at least in regions.

13. The purging and/or ventilation valve as claimed in at least one of the preceding claims additionally comprising at least one securing device (80) for securing the arrangement of the first valve body in the first valve housing interior and/or of the second valve body in the second valve housing interior.

14. An operating liquid container (90) comprising a purging and/or ventilation valve as claimed in at least one of the preceding claims.

15. The operating liquid container as claimed in claim 14, wherein the purging and/or ventilation valve is connected to the outer wall (93) of the operating liquid container in a fluid-tight manner.

## Revendications

1. Vanne de désaération et/ou d'aération (1) destinée à un réservoir de liquide de service, laquelle présente les caractéristiques suivantes :
- la vanne de désaération et/ou d'aération comporte un boîtier (2) pourvue d'une partie supérieure (3) et d'une partie inférieure (4) ;
- la partie inférieure peut être reliée à la partie supérieure de telle sorte que le boîtier comporte un volume de réception (31) qui est délimité par une paroi de séparation (41) formée entre la partie supérieure et la partie inférieure ;
- la partie inférieure comporte au moins un premier boîtier de vanne (42) pourvu d'un premier espace intérieur de boîtier de vanne (43) et un deuxième boîtier de vanne (45) pourvu d'un deuxième espace intérieur de boîtier de vanne (46), un premier corps de vanne (44) étant disposé dans le premier espace intérieur de boîtier de vanne et un deuxième corps de vanne (47) étant disposé de manière variable en position dans le deuxième espace intérieur de boîtier de vanne ;
- le premier boîtier de vanne comporte une première ouverture de communication (48) destinée à l'échange de fluide entre l'espace intérieur du premier boîtier de vanne et un espace intérieur (91) du réservoir de liquide de service ;
- le deuxième boîtier de vanne comporte une deuxième ouverture de communication (49) destinée à l'échange de fluide entre l'espace intérieur du deuxième boîtier de vanne et l'espace intérieur du réservoir de liquide de service ;
- une première ouverture de ventilation (51), au moyen de laquelle le volume de réception et l'espace intérieur du premier boîtier de vanne peuvent être reliés fluidiquement, et une deuxième ouverture de ventilation (52), au moyen de laquelle le volume de réception et l'espace intérieur du deuxième boîtier de vanne peuvent être reliés fluidiquement, sont ménagées dans la paroi de séparation et
- la première ouverture de ventilation et la deuxième ouverture de ventilation sont ménagées sensiblement à la même hauteur de boîtier (h) par rapport à l'extension longitudinale (L) du boîtier,
**caractérisée en ce que**
la partie supérieure (3) comporte au moins une ouverture de sortie (60) qui traverse la paroi de la partie supérieure et forme une liaison fluidique allant du volume de réception (31) à l'environnement (94), et l'orifice de sortie (60) comprenant une vanne de surpression et/ou de dépression.

2. Vanne de désaération et/ou d'aération selon la revendication 1, **caractérisée en ce que** la partie supérieure comporte au moins deux ouvertures de sortie (60), une première ouverture de sortie (60) comportant une vanne de surpression et une deuxième ouverture de sortie (60) comportant une vanne de dépression et la paroi de séparation (41) étant formée par une paroi de la partie inférieure (4) .

3. Vanne de désaération et/ou d'aération selon l'une au moins des revendications précédentes, **caractérisée en ce que** le diamètre intérieur de la première ouverture de ventilation est supérieur au diamètre intérieur de la deuxième ouverture de ventilation.

4. Vanne de désaération et/ou d'aération selon l'une au moins des revendications précédentes, **caractérisée en ce que** le premier boîtier de vanne présente une surface latérale continue (61).

5. Vanne de désaération et/ou d'aération selon l'une au moins des revendications précédentes, **caractérisée en ce que** le deuxième boîtier de vanne comporte au moins une troisième ouverture de communication (63) destinée à l'échange de fluide entre le deuxième espace intérieur de boîtier de vanne et l'espace intérieur du réservoir de liquide de service.

6. Vanne de désaération et/ou d'aération selon l'une au moins des revendications précédentes, **caractérisée en ce que** la partie supérieure et la partie inférieure sont reliées entre elles par une liaison par complémentarité de formes et/ou par une liaison en force ou par une liaison de matière.

7. Vanne de désaération et/ou d'aération selon la revendication 6, **caractérisée en ce que** la partie supérieure et la partie inférieure sont reliées par une liaison étanche aux fluides.

8. Vanne de désaération et/ou d'aération selon la revendication 7, **caractérisée en ce que** la partie supérieure, la partie inférieure et le réservoir de liquide de service peuvent être reliés entre eux de manière étanche par une liaison de matière.

9. Vanne de désaération et/ou d'aération selon l'une au moins des revendications précédentes, **caractérisée en ce qu'**un collecteur de gouttes (70) est disposé à l'intérieur du volume de réception.

10. Vanne de désaération et/ou d'aération selon la revendication 9, **caractérisée en ce que** le collecteur de gouttes présente au moins une surface de déflexion (71) pourvue d'une structure en labyrinthe.

11. Vanne de désaération et/ou d'aération selon l'une des revendications 9 ou 10, **caractérisée en ce que** le collecteur de gouttes est réalisé d'une seule pièce avec la partie supérieure et/ou la partie inférieure.

12. Vanne de désaération et/ou d'aération selon au moins l'une des revendications précédentes, **caractérisée en ce que** la paroi de séparation est incurvée au moins par endroits en s'écartant du volume de réception.

13. Vanne de désaération et/ou d'aération selon l'une au moins des revendications précédentes, comprenant en outre au moins un dispositif de fixation (80) destiné à fixer l'ensemble du premier corps de vanne dans le premier espace intérieur du boîtier de vanne et/ou du deuxième corps de vanne dans le deuxième espace intérieur du boîtier de vanne.

14. Réservoir de liquide de service (90) comprenant une vanne de désaération et/ou d'aération selon l'une au moins des revendications précédentes.

15. Réservoir de liquide de service selon la revendication 14, la vanne de désaération et/ou d'aération étant reliée de manière étanche aux fluides à la paroi extérieure (93) du réservoir de fluide de service.
